# EUROPEAN PATENT SPECIFICATION

(11) **EP 3 680 648 B1**
(45) Date of publication and mention of the grant of the patent: **19.07.2023**
(21) Application number: 17924086.6
(22) Date of filing: 19.10.2017
(51) Int. Cl.: G01N 21/88, G01C 11/02, B64C 39/02, G05D 1/10

(54) **PORT MACHINERY INSPECTION DEVICE AND INSPECTION METHOD**
VORRICHTUNG UND VERFAHREN ZUR INSPEKTION EINER HAFENANLAGE
DISPOSITIF D'INSPECTION ET PROCÉDÉ D'INSPECTION DE MACHINES DE PORT

(30) Priority: 08.09.2017 CN 201710805734
(43) Date of publication of application: 15.07.2020
(73) Proprietor: Shanghai Zhenhua Heavy Industries Co., Ltd., Shanghai 200125 (CN)
(72) Inventor: LI, Wenjun, Shanghai 200125 (CN); YAN, Yunfu, Shanghai 200125 (CN); LUO, Lei, Shanghai 200125 (CN); ZHAO, Zijian, Shanghai 200125 (CN); YU, Jun, Shanghai 200125 (CN); DAI, Wei, Shanghai 200125 (CN); YI, Qing, Shanghai 200125 (CN); LU, Yao, Shanghai 200125 (CN); SHAN, Jianguo, Shanghai 200125 (CN); XIONG, Dinggen, Shanghai 200125 (CN); FU, Maohua, Shanghai 200125 (CN)
(74) Representative: Nederlandsch Octrooibureau
(86) International application number: PCT/CN2017/106796
(87) International publication number: WO 2019/047338

(56) References cited:
- EP-A1- 3 193 496
- EP-A2- 1 193 470
- WO-A1-2017/103982
- CN-A- 103 869 819
- CN-A- 104 713 527
- CN-A- 106 970 639
- CN-A- 106 970 639
- CN-U- 203 845 022
- KR-B1- 101 707 865
- US-A1- 2017 180 460

## Description

### BACKGROUND OF THE INVENTION

### 1. Field of the Invention

The present invention relates to the field of port machinery, and more particularly, to inspection and evaluation technologies for port machinery.

### 2. The Related Art

Port machineries are widely used in the field of logistics. Port machineries mainly include shore container cranes, rail cranes, tire cranes, portal cranes and ship unloaders. Due to the heavy transportation tasks and long service life of port machinery, the health inspection of port machinery structure is very important for the normal operation of the port. The key of safe work for port machinery is the steel mechanism. The working position of port machinery is close to the shore, which is a corrosive environment. Therefore, it is necessary to perform regular inspections for port machinery to check its health.

The current inspection of port machinery is mainly realized as manual inspections. The inspectors climb the port machinery to inspect the structure of the port machinery, take pictures of the structural defect areas, and draft an evaluation report according to the inspection results and pictures. With the enlargement of port machinery, the size of existing port machinery reaches 150m*30m* 100m. It is difficult for inspectors to climb and the risk is very high. In addition, due to the special structure of the port machinery, some areas can not be reached, or can not be photographed because of the perspective of the inspectors. Therefore some blind spots for inspection are formed. In general, the existing manual inspection methods are inefficient, have long detection cycles, have poor detection results, have many blind spots, and have high safety risks. Arial drones have been used for taking precise images of engineering structures such as described in EP 3193496.

### SUMMARY

The present invention discloses an inspection technology for port machinery based on drones.

According to an embodiment of the present invention, an inspection apparatus for port machinery is disclosed. The apparatus comprises: a group of drones, a group of ground locators, a ground monitoring and processing device and a data management and evaluation device. The group of drones includes one or more drones, the drone carries out inspections of the port machinery and obtains images of the port machinery. The group of ground locators includes one or more ground locators, the ground locator locates the three-dimensional position of the drone. The ground monitoring and processing device communicates with the drone, controls the flight of the drone, receives the images acquired by the drone and monitors the status of the drone. The data management and evaluation device communicates with the ground monitoring and processing device, the data management and evaluation device stores the basic data of the port machinery, the data management and evaluation device receives the image acquired by the drone from the ground monitoring and processing device, performs structural defect identification and structural defect analysis based on the image, and generates evaluation results based on the structural defect identification and structural defect analysis.

In an embodiment, the ground monitoring and processing device comprises: a main control machine and a hand-held remote controller. The main control machine plans an inspection route for the drone, controls the drone to fly along the inspection route and performs aerial photography so as to obtain the image of the port machinery, the main control machine also monitors the status of the drone. The hand-held remote controller, the hand-held remote controller receives operation instructions, and controls the drone to fly and perform aerial photography so as to obtain images of port machinery according to the operation instructions. Wherein, when the hand-held remote controller is not in operation, the drone is controlled by the main control machine and operates automatically, when the hand-held remote controller is in operation, the drone quits from automatic operation and is controlled by the hand-held remote controller.

In an embodiment, the main control machine comprises: an interface interaction module, a front-end data management module, a route planning module, an aerial photography control module, a monitoring module and a communication module. The interface interaction module generates an interactive interface for receiving instructions and displaying information. The front-end data management module obtains the basic data of the port machinery from the data management and evaluation device or the interface interaction module. The route planning module plans an automatic inspection route based on the basic data of port machinery obtained by the front-end data management module, or plans a designate inspection route based on the instructions obtained from the interactive interface. The aerial photography control module controls the drone to fly and perform aerial photography according to the automatic inspection route or designated inspection route planned by the route planning module to obtain the image of port machinery. The monitoring module monitors the 3D position and status of the drone. The communication module communicates with the data management and evaluation device and the hand-held remote controller.

In an embodiment, the hand-held remote controller comprises: a hand-held manipulator, a data transmission module and an image transmission module. The hand-held manipulator is held by an operator, receives operation instructions and controls the drone according to the operation instructions. The data transmission module performs data communication with the drone and the main control machine, and monitors the status of the drone. The image transmission module performs image communication with the drone and the main control machine, and obtains the images and videos of the port machinery obtained by the aerial photography of the drone.

In an embodiment, the data management and evaluation device comprises: a back-end data management module, a structural defect image recognition module, a structural defect image analysis module and an evaluation module. The back-end data management module processes basic data of port machinery, route data, status data of drones, and image data of port machinery. The structural defect image recognition module is configured to identify structural defect areas in images of port machinery, mark and classify structural defect areas. The structural defect image analysis module is configured to perform quantitative calculation on the structural defect areas marked and classified by the structural defect image identification module, and correlate the results of the quantitative calculation with the structural defect areas. The evaluation module is configured to generate an evaluation result based on the result of the quantitative calculation and the correlation between the result of the quantitative calculation and the structural defect area.

In an embodiment, the classification of structural defect areas includes: corrosion, cracks, missing bolts, paint stripping, or other structural defects. The quantitative calculation of the structural defect areas includes: the size of the corrosion area, the size of the paint stripped area, the length and width of the crack, the number and location of the missing bolts.

In an embodiment the basic data of the port machinery includes size data and position data of the port machinery. The route data includes planned route data and actual route data, wherein the planned route data includes automatic inspection route data and designated inspection route data. The status data of drones includes: time, detection point number, plane horizontal coordinate, plane longitudinal coordinate, altitude coordinate, pitch angle, tilt angle, yaw angle, pitch angle of the photography gimbal, tilt angle of the photography gimbal, and yaw angle of the of the photography gimbal. The processing of the basic data, the route data, the status data of drones and image data of port machinery includes: saving, deleting, modifying, encrypting, decrypting, classifying, filtering, statistics, importing, and exporting.

In an embodiment, the drone includes: a fuselage, a flight module, a flight control module, a data transmission module, an image transmission module, an obstacle avoidance module, a positioning module, an aerial camera and a tracking camera.

According to an embodiment of the present invention, an inspection method for port machinery is disclosed. The inspection method utilizes the inspection apparatus for port machinery as mentioned above. The inspection method comprises:
a step of route planning, planning an automatic inspection route based on the basic data of port machinery;
a step of drone aerial photography, controlling the drone to fly according to automatic inspection route and taking aerial photos of the port machinery, monitoring the status of the drone, and receiving images acquired by the drone;
a step of data processing, performing structural defect recognition and structural defect analysis on the images acquired by the drone, and generating evaluation results based on the structural defect recognition and structural defect analysis.

In an embodiment, the inspection method further comprises:
a step of route adjusting, generating a designated inspection route according to the instructions obtained from the interactive interface, wherein the drone flies according to the designated inspection route to perform aerial photography of the port machinery.

In an embodiment, the inspection method further comprises:
a step of manual control, operating the hand-held remote controller, wherein the drone quits automatic operation and is controlled to fly and perform aerial photography of the port machinery under the control of the hand-held remote controller.

The inspection apparatus and inspection method for port machinery according to the present invention can automatically plan the route of the drone based on the basic data of the port machinery. The drone automatically flies and performs aerial photography according to the planned route to carry out the inspection and collect images and videos of the port machinery. The image data and video data are transmitted to a data management and evaluation device, which performs structural defect identification and structural defect analysis on the images. The data management and evaluation device generates evaluation results based on the structural defect identification and structural defect analysis. When necessary, it is able to manually modify the route of the drone or switch the drone to manual operation mode. The inspection device and inspection method have high degree of automation, high detection efficiency, wide application range, and high safety factor.

### BRIEF DESCRIPTION OF THE DRAWINGS

The above and other features, natures, and advantages of the invention will be apparent by the following description of the embodiments incorporating the drawings, wherein,
FIG. 1 is a schematic structural diagram of an inspection apparatus for port machinery according to an embodiment of the present invention.
FIG. 2 illustrates a structural block diagram of an inspection apparatus for port machinery according to an embodiment of the present invention.
FIG. 3 illustrates a structural block diagram of a ground monitoring and processing device in the inspection apparatus for port machinery according to an embodiment of the present invention.
FIG. 4a and FIG. 4b disclose an exemplary flow of an inspection method for port machinery according to an embodiment of the present invention.

### DETAILED DESCRIPTION OF EMBODIMENTS

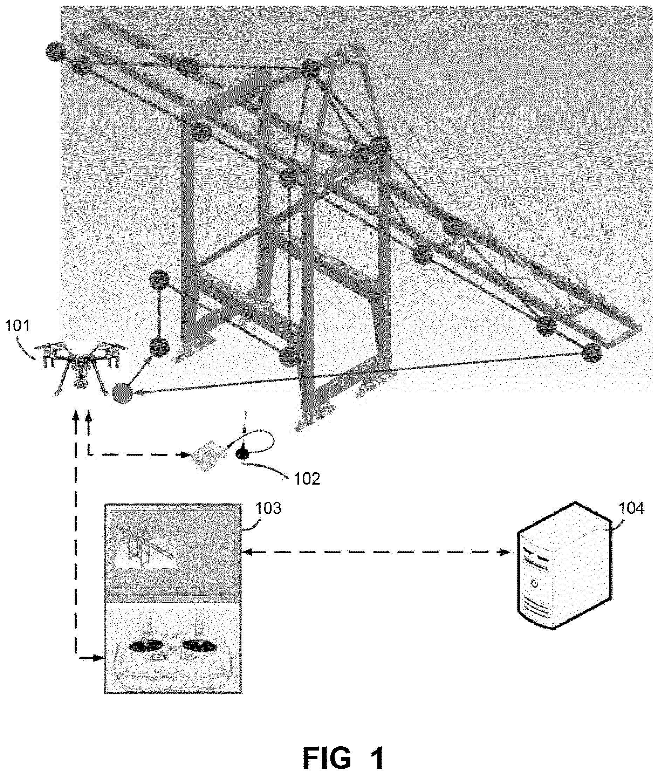

Referring to FIG. 1, FIG. 1 is a schematic structural diagram of an inspection apparatus for port machinery according to an embodiment of the present invention. The inspection apparatus for port machinery includes: a group of drones 101, a group of ground locators 102, a ground monitoring and processing device 103 and a data management and evaluation device 104.

The group of drones 101 includes one or more drones, the drone carries out inspections of a port machinery and obtains images of the port machinery. The group of ground locators 102 includes one or more ground locators, the ground locator locates the three-dimensional position of the drone. The ground monitoring and processing device 103 communicates with the drone, controls the flight of the drone, receives the images acquired by the drone and monitors the status of the drone. The data management and evaluation device 104 communicates with the ground monitoring and processing device, the data management and evaluation device stores the basic data of the port machinery, the data management and evaluation device receives the image acquired by the drone from the ground monitoring and processing device, performs structural defect identification and structural defect analysis based on the image, and generates evaluation results based on the structural defect identification and structural defect analysis.

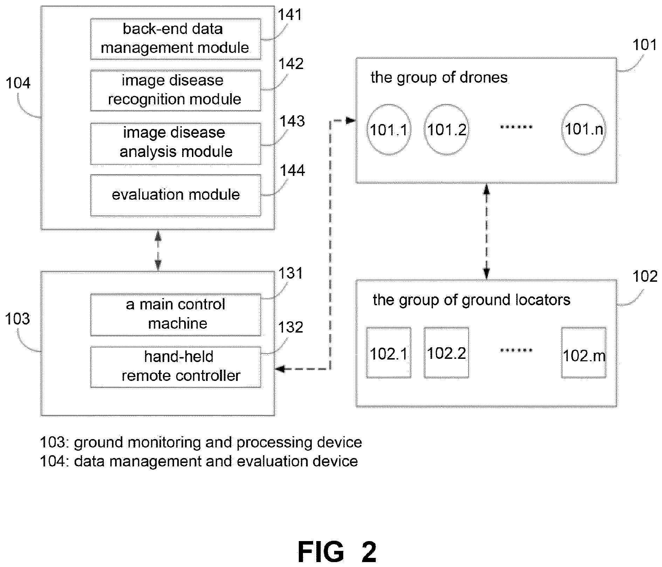

Referring to FIG. 2, FIG. 2 illustrates a structural block diagram of an inspection apparatus for port machinery according to an embodiment of the present invention. FIG. 2 illustrates the structure of the inspection apparatus for port machinery in detail. The group of drones 101 includes one or more drones, and in FIG. 2, each drone in the group of drones 101 is marked as 101.1~101.n. The drone used here is a drone with the function of automatic tracking flight and aerial photography. In an embodiment, the drone includes: a fuselage, a flight module, a flight control module, a data transmission module, an image transmission module, an obstacle avoidance module, a positioning module, an aerial camera and a tracking camera. The drone with the function of automatic tracking flight and aerial photography is purchased from the market. The basic structure and functions of the drone will not be described here in detail. The group of ground locators 102 includes one or more ground locators, and in FIG. 2, each ground locator in the group of ground locators 102 is marked as 102.1~102.m. The ground locator locates the three-dimensional position of the drone. In an embodiment, the ground locator locates the three-dimensional position of the drone according to a wireless pulse signal or a satellite signal. Of course, those skilled in the art shall understand that the method of locating the three-dimensional position of the drone by the ground locator is not limited to the wireless pulse signal or satellite signal described above.

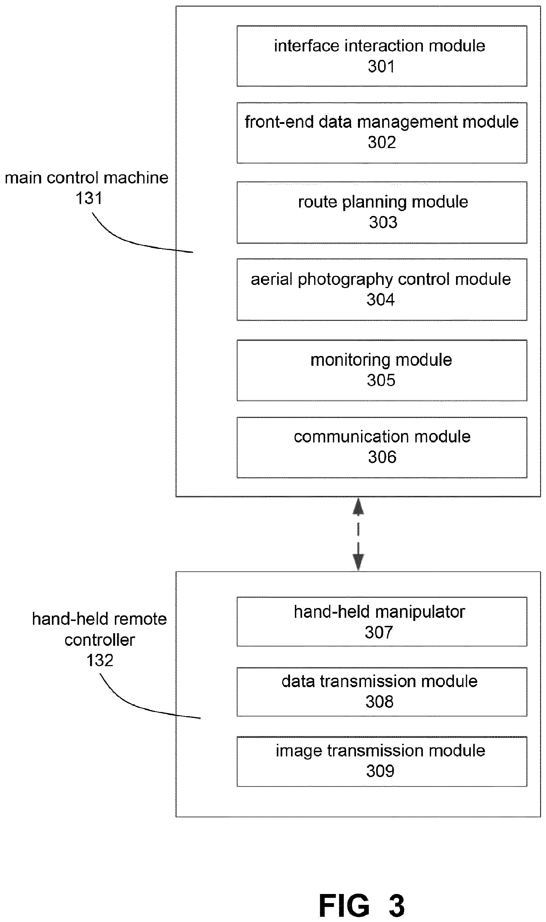

The ground monitoring and processing device 103 comprises: a main control machine 131 and a hand-held remote controller 132. The main control machine 131 plans an inspection route for the drone, controls the drone to fly along the inspection route and performs aerial photography so as to obtain the image of the port machinery, the main control machine also monitors the status of the drone. The hand-held remote controller 132 receives operation instructions, and controls the drone to fly and perform aerial photography so as to obtain images of port machinery according to the operation instructions. When the hand-held remote controller 132 is not in operation, the drone is controlled by the main control machine 131 and operates automatically. When the hand-held remote controller 132 is in operation, the drone quits from automatic operation and is controlled by the hand-held remote controller 132. FIG. 3 illustrates a structural block diagram of a ground monitoring and processing device in the inspection apparatus for port machinery according to an embodiment of the present invention. As shown in FIG. 3, the main control machine 131 includes: an interface interaction module 301, a front-end data management module 302, a route planning module 303, an aerial photography control module 304, a monitoring module 305 and a communication module 306. The interface interaction module 301 generates an interactive interface for receiving instructions and displaying information. The front-end data management module 302 obtains the basic data of the port machinery from the data management and evaluation device 104 or the interface interaction module 301. In an embodiment, the basic data of the port machinery includes size data and position data of the port machinery. The route planning module 303 plans an automatic inspection route based on the basic data of port machinery obtained by the front-end data management module 302, that is, plans the automatic inspection route based on the size and position of port machinery. Or, the route planning module 303 plans a designate inspection route based on the instructions obtained from the interactive interface. In some cases, it is necessary to modify the automatic inspection route. At this time, an instruction may be input through the interactive interface generated by the interface interaction module 301 to manually modify the inspection route to generate a designated inspection route. After the designated inspection route is generated, the drone flies and performs aerial photography according to the newly modified designated inspection route. The aerial photography control module 304 controls the drone to fly and perform aerial photography according to the automatic inspection route or designated inspection route planned by the route planning module to obtain the image of port machinery. The monitoring module 305 monitors the 3D position and status of the drone. The communication module 306 communicates with the data management and evaluation device 104 and the hand-held remote controller 132. In an embodiment, the front-end data management module 302 processes the basic data, the route data, the status data of drones and image data of port machinery, and the processing of date includes: saving, deleting, modifying, encrypting, decrypting, classifying, filtering, statistics, importing, and exporting. Continue to refer to FIG. 3, the hand-held remote controller 132 comprises: a hand-held manipulator 307, a data transmission module 308 and an image transmission module 309. The hand-held manipulator 307 is held by an operator, receives operation instructions and controls the drone according to the operation instructions. In an embodiment, the hand-held manipulator 307 includes a joystick, buttons, and a wheel. The data transmission module 308 performs data communication with the drone and the main control machine, and monitors the status of the drone. The data transmission module 308 is used for transmission of the basic data of port machinery, the route data and the status data of drones. The image transmission module 309 performs image communication with the drone and the main control machine, and obtains the images and videos of the port machinery obtained by the aerial photography of the drone. The image transmission module 309 is used for transmission of the image date or video data of port machinery.

Back to FIG. 2, the data management and evaluation device 104 comprises: a back-end data management module 141, a structural defect image recognition module 142, a structural defect image analysis module 143 and an evaluation module 144. The back-end data management module 141 processes basic data of port machinery, route data, status data of drones, and image data of port machinery. In an embodiment, the basic data of the port machinery includes size data and position data of the port machinery. The route data includes planned route data and actual route data. The status data of drones includes: time, detection point number, plane horizontal coordinate (or longitude coordinates), plane longitudinal coordinate (or latitude coordinates), altitude coordinate, pitch angle, tilt angle, yaw angle, pitch angle of the photography gimbal, tilt angle of the photography gimbal, and yaw angle of the of the photography gimbal. The processing of the basic data, the route data, the status data of drones and image data of port machinery includes: saving, deleting, modifying, encrypting, decrypting, classifying, filtering, statistics, importing, and exporting, etc,. The structural defect image recognition module 142 identifies structural defect areas in images of port machinery, marks and classifies structural defect areas. In an embodiment, the classification of structural defect areas includes: corrosion, cracks, missing bolts, paint stripping, or other structural defects. The structural defect image analysis module 143 performs quantitative calculation on the structural defect areas marked and classified by the image structural defect identification module, and correlates the results of the quantitative calculation with the structural defect areas. In an embodiment, the quantitative calculation of the structural defect areas includes: the size of the corrosion area, the size of the paint stripped area, the length and width of the crack, the number and location of the missing bolts. The evaluation module generates an evaluation result based on the result of the quantitative calculation and the correlation between the result of the quantitative calculation and the structural defect area.

The present invention further discloses an inspection method for port machinery utilizing the inspection apparatus for port machinery mentioned above, the inspection method comprises:
a step of route planning, planning an automatic inspection route based on the basic data of port machinery;
a step of drone aerial photography, controlling the drone to fly according to automatic inspection route and taking aerial photos of the port machinery, monitoring the status of the drone, and receiving images acquired by the drone;
a step of data processing, performing structural defect recognition and structural defect analysis on the images acquired by the drone, and generates evaluation results based on the structural defect recognition and structural defect analysis.

In an embodiment, when it is necessary to adjust the automatic inspection route, the inspection method for port machinery further comprises: a step of route adjusting, generating a designated inspection route according to the instructions obtained from the interactive interface, wherein the drone flies according to the designated inspection route to perform aerial photography of the port machinery.

In an embodiment, when it is necessary to manually operate the drone, the inspection method for port machinery further comprises: a step of manual control, operating the hand-held remote controller, wherein the drone quits automatic operation and is controlled to fly and perform aerial photography of the port machinery under the control of the hand-held remote controller.

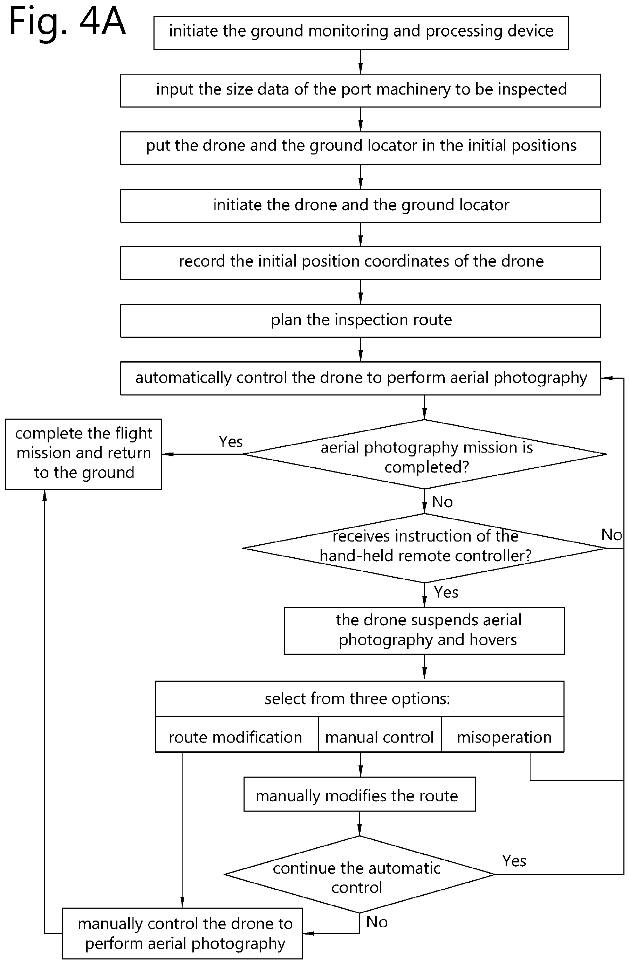

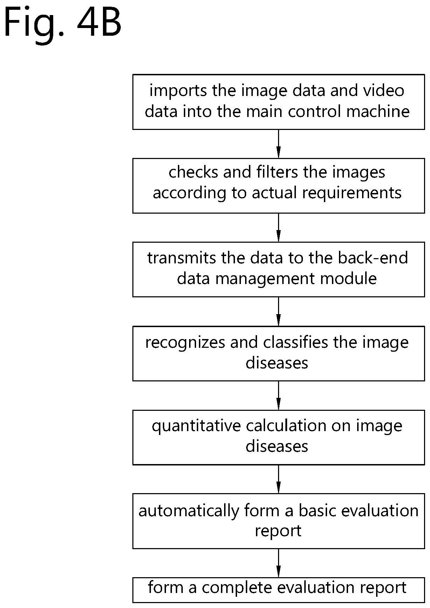

FIG. 4a and FIG. 4b disclose an exemplary flow of an inspection method for port machinery according to an embodiment of the present invention. The exemplary flow includes the following steps:
Step S1: Initiate the ground monitoring and processing device 103, and check to determine that the main controller 131 and the hand-held remote controller 132 are in a normal state.
Step S2: Input the size data of the port machinery to be inspected through the interface interaction module 301 of the main control machine 131, or download the size data of the port machinery to be inspected from the back-end data management module 141 through the communication module 306 of the main control machine 131.
Step S3: Put the drone 101 and the ground locator 102 in the initial positions respectively. The initial position of the drone 101 is a predefined relative position that refers to the position of the port machinery to be inspected. The ground locator 102 is arranged at an appropriate position on the ground according to the required positioning accuracy of the drone.
Step S4: Initiate the drone 101 and the ground locator 102, and check to confirm that both the drone and the ground locator are in a normal state.
Step S5: Record the initial position coordinates of the drone 101 in the main control machine 131, including its plane horizontal coordinate (or longitude coordinates), plane longitudinal coordinate (or latitude coordinates), altitude coordinate.
Step S6: Based on the size data of the port machinery that had been imported into the main control machine 131, the route planning module 303 executes the route planning program to automatically generate an automatic inspection route matching the port machinery to be inspected. When it is necessary, the operator may manually modify the automatic inspection route through the interface interaction module 301, modify it to be the designated inspection route, and save the designated inspection route as the latest planned route.
Step S7: Automatically control the drone 101 to perform aerial photography according to the latest planned route.
Step S8: The ground monitoring processing system 103 receives the mission status of the drone 101, and determines whether the aerial photography mission is completed. If it is determined that the aerial photography mission is not completed, proceed to step S9; if it is determined that the aerial photography mission is completed, proceed to step S15.
Step S9: The main controller 131 detects the control instruction of the hand-held remote controller 132 in real time, and determines whether any instruction is received. If an instruction is received, proceed to step S10; if no instruction is received, return to step S7.
Step S10: The ground monitoring processing system 103 sends an instruction to the drone 101 to control the drone 101 to suspend aerial photography and hover.
Step S11: The main control machine 131 displays three options through the interactive interface: route modification, manual control and misoperation, and wait for the operator to make a choice. If the option route modification is chosen, proceed to step S12; if the option manual control is chosen, proceed to step S14; if the option misoperation is chosen, return to step S7.
Step S12: The operator manually modifies the route parameters in the main control machine 131 according to the actual requirements, designates the inspection route and saves the designated inspection route as the latest planned route.
Step S13: The main control machine 131 inquires the operator through the interactive interface whether to continue the automatic control. If the operator selects No, proceed to step S14, and if the operator selects Yes, return to step S7.
Step S14: The operator manually operates the hand-held remote controller 132 to control the drone 101 to perform aerial photography according to the manual control instruction.
Step S15: In the automatic control mode, the ground monitoring and processing system 103 automatically controls the drone 101 to complete the flight mission and return to the ground. In the manual control mode, the operator operates the hand-held remote controller 132 to manually control the drone 101 and complete the flight mission and return to the ground.
Step S16: The operator imports the image data and video data collected by the drone 101 into the main control machine 131.
Step S17: The operator manually checks and filters the images that have been imported into the main control machine 131 according to actual requirements.
Step S18: The operator transmits the route data, all or filtered images and video data in the main control machine 131 to the back-end data management module 141 in the data management and evaluation device 104.
Step S19: The structural defect image recognition module 142 in the data management and evaluation device 104 automatically recognizes the structural surface structural defects in the image, classifies the surface structural defects into corrosion, cracks, missing bolts, paint stripping, or other structural defects, and marks the structurally defective area and type in the image that recognized with structural defect. The processed image is saved to the back-end data management module 141.
Step S20: The structural defect image analysis module 143 performs quantitative calculation on images that have been recognized and classified as corrosion, cracks, missing bolts or paint stripping. The result of the quantitative calculation includes: the size of the corrosion area, the size of the paint stripped area, the length and width of the crack, the number and location of the missing bolts. The results are correlated with the structural defect images.
Step S21: The evaluation module 144 automatically writes the structural defect images and analysis results as an evaluation result into a pre-stored evaluation report template file to form a basic evaluation report.
Step S22: A professional evaluator checks the basic evaluation report in the evaluation module 144, writes recommendations such as maintenance comments into the basic evaluation report, and saves it as a complete evaluation report.

The inspection apparatus and inspection method for port machinery according to the present invention can automatically plan the route of the drone based on the basic data of the port machinery. The drone automatically flies and performs aerial photography according to the planned route to carry out the inspection and collect images and videos of the port machinery. The image data and video data are transmitted to a data management and evaluation device, which performs structural defect identification and structural defect analysis on the images. The data management and evaluation device generates evaluation results based on the structural defect identification and structural defect analysis. When necessary, it is able to manually modify the route of the drone or switch the drone to manual operation mode. The inspection device and inspection method have high degree of automation, high detection efficiency, wide application range, and high safety factor.

The above embodiments are provided to those skilled in the art to realize or use the invention, under the condition that various modifications or changes being made by those skilled in the art without departing from the scope of the invention, which is defined by the appended claims.

## Claims

1. An inspection apparatus for port machinery comprising:
one or more drones (101) suitable for carrying out inspections of a port machinery and obtaining images of the port machinery;
one or more ground locators (102) suitable for locating the three-dimensional position of each drone;
a ground monitoring and processing device (103), suitable for communicating with each drone, controlling the flight of each drone, receiving the images acquired by each drone and monitoring the status of each drone;
a data management and evaluation device (104) suitable for communicating with the ground monitoring and processing device, storing basic data of the port machinery, receiving the image acquired by each drone from the ground monitoring and processing device, performing structural defect identification and structural defect analysis based on the image, and generating evaluation results based on the structural defect identification and structural defect analysis;
wherein the data management and evaluation device comprises:
a back-end data management module (141) suitable for processing the basic data of port machinery, route data, status data of each drone, and image data of port machinery;
**characterised in that** the data management and evaluation device further comprises a structural defect image recognition module (142) configured to identify structural defect areas in images of port machinery, mark and classify structural defect areas, wherein the classification of structural defect areas includes: corrosion, cracks, missing bolts, paint stripping, and other structural defects;
a structural defect image analysis module (143) configured to perform quantitative calculation on the structural defect areas marked and classified by the image structural defect identification module, and correlate the results of the quantitative calculation with the structural defect areas, wherein the quantitative calculation of the structural defect areas includes: the size of the corrosion area, the size of the paint stripped area, the length and width of the crack, the number and location of the missing bolts;
an evaluation module (144) configured to generate an evaluation result based on the result of the quantitative calculation and the correlation between the result of the quantitative calculation and the structural defect area.

2. The inspection apparatus for port machinery according to claim 1, **characterized in that** the ground monitoring and processing device comprises:
a main control machine (131) suitable for planning an inspection route for each drone, controlling each drone to fly along the inspection route and performing aerial photography so as to obtain the image of the port machinery, and monitoring the status of each drone;
a hand-held remote controller (132) suitable for receiving operation instructions, and controlling each drone to fly and perform aerial photography so as to obtain images of port machinery according to the operation instructions;
wherein, when the hand-held remote controller is not in operation, each drone is controlled by the main control machine and operates automatically, when the hand-held remote controller is in operation, each drone quits from automatic operation and is controlled by the hand-held remote controller.

3. The inspection apparatus for port machinery according to claim 2, **characterized in that** the main control machine comprises:
an interface interaction module (301), suitable for generating an interactive interface for receiving instructions and displaying information;
a front-end data management module (302) suitable for obtaining the basic data of the port machinery from the data management and evaluation device or the interface interaction module;
a route planning module (303) suitable for planning an automatic inspection route based on the basic data of port machinery obtained by the front-end data management module, or planning a designate inspection route based on the instructions obtained from the interactive interface;
an aerial photography control module (304) suitable for controlling each drone to fly and perform aerial photography according to the automatic inspection route or designated inspection route planned by the route planning module to obtain the image of port machinery;
a monitoring module (305) suitable for monitoring the 3D position and status of each drone;
a communication module (306) suitable for communicating with the data management and evaluation device and the hand-held remote controller.

4. The inspection apparatus for port machinery according to claim 2, **characterized in that** the hand-held remote controller comprises:
a hand-held manipulator (307) suitable for being held by an operator, receiving operation instructions and controlling each drone according to the operation instructions;
a data transmission module (308) suitable for performing data communication with each drone and the main control machine, and monitoring the status of each drone;
an image transmission module (309) suitable for performing image communication with each drone and the main control machine, and obtaining the images and videos of the port machinery obtained by the aerial photography of each drone.

5. The inspection apparatus for port machinery according to claim 1, **characterized in that**,
the basic data of the port machinery includes size data and position data of the port machinery;
the route data includes planned route data and actual route data, wherein the planned route data includes automatic inspection route data and designated inspection route data;
the status data of drone includes: time, detection point number, plane horizontal coordinate, plane longitudinal coordinate, altitude coordinate, pitch angle, tilt angle, yaw angle, pitch angle of the photography gimbal, tilt angle of the photography gimbal, and yaw angle of the of the photography gimbal;
the processing of the basic data, the route data, the status data of drone and image data of port machinery includes: saving, deleting, modifying, encrypting, decrypting, classifying, filtering, statistics, importing, and exporting.

6. The inspection apparatus for port machinery according to claim 1, **characterized in that** each drone includes: a fuselage, a flight module, a flight control module, a data transmission module, an image transmission module, an obstacle avoidance module, a positioning module, an aerial camera and a tracking camera.

7. An inspection method for port machinery utilizing the inspection apparatus for port machinery of any one of claims 1 to 6, **characterized in that** the inspection method comprises:
a step of route planning, planning an automatic inspection route based on the basic data of port machinery;
a step of drone aerial photography, controlling each drone to fly according to automatic inspection route and taking aerial photos of the port machinery, monitoring the status of each drone, and receiving images acquired by the drone;
a step of data processing, performing structural defect recognition and structural defect analysis on the images acquired by each drone, and generates evaluation results based on the structural defect recognition and structural defect analysis,
wherein the defect recognition comprises identifying structural defect areas in images of port machinery by the structural defect image recognition module, marking and classifying structural defect areas, wherein the classification of structural defect areas includes: corrosion, cracks, missing bolts, paint stripping, and other structural defects;
wherein the structural defect analysis comprises quantitative calculation by the structural defect image analysis module on the structural defect areas marked and classified by the image structural defect identification module, and correlating the results of the quantitative calculation with the structural defect areas, wherein the quantitative calculation of the structural defect areas includes: the size of the corrosion area, the size of the paint stripped area, the length and width of the crack, the number and location of the missing bolts.

8. The inspection method for port machinery according to claim 7, **characterized in that** further comprises:
a step of route adjusting, generating a designated inspection route according to the instructions obtained from the interactive interface, wherein each drone flies according to the designated inspection route to perform aerial photography of the port machinery.

9. The inspection method for port machinery according to claim 7, **characterized in that** further comprising:
a step of manual control, operating the hand-held remote controller, wherein each drone quits automatic operation and is controlled to fly and perform aerial photography of the port machinery under the control of the hand-held remote controller.

## Patentansprüche

1. Inspektionsvorrichtung für Hafenmaschinen, umfassend:
eine oder mehrere Drohnen (101), die geeignet sind, Inspektionen an Hafenmaschinen durchzuführen und Bilder der Hafenmaschinen zu erhalten;
einen oder mehrere Bodenortungsgeräte (102), die geeignet sind, die dreidimensionale Position jeder Drohne zu orten;
eine Bodenüberwachungs- und -verarbeitungsvorrichtung (103), die geeignet ist, mit jeder Drohne zu kommunizieren, den Flug jeder Drohne zu steuern, die von jeder Drohne aufgenommenen Bilder zu empfangen und den Status jeder Drohne zu überwachen;
eine Datenverwaltungs- und -auswertungsvorrichtung (104), die geeignet ist, mit der Bodenüberwachungs- und -verarbeitungsvorrichtung zu kommunizieren, Basisdaten der Hafenmaschinen zu speichern, das von jeder Drohne erfasste Bild von der Bodenüberwachungs- und -verarbeitungsvorrichtung zu empfangen, eine Strukturdefektidentifikation und eine Strukturdefektanalyse auf der Grundlage des Bildes durchzuführen und Bewertungsergebnisse auf der Grundlage der Strukturdefektidentifikation und der Strukturdefektanalyse zu erzeugen;
wobei die Datenverwaltungs- und -auswertungsvorrichtung umfasst:
ein Backend-Datenverwaltungsmodul (141), das geeignet ist, die Basisdaten der Hafenmaschinen, Routendaten, Statusdaten jeder Drohne und Bilddaten der Hafenmaschinen zu verarbeiten;
**dadurch gekennzeichnet, dass** die Datenverwaltungs- und -auswertungsvorrichtung ferner ein Strukturdefekt-Bilderkennungsmodul (142) umfasst, das konfiguriert ist, um Strukturdefektbereiche in Bildern von Hafenmaschinen zu identifizieren, Strukturdefektbereiche zu markieren und zu klassifizieren, wobei die Klassifizierung von Strukturdefektbereichen umfasst:
Korrosion, Risse, fehlende Bolzen, Farbablösungen und andere Strukturdefekte;
ein Strukturdefekt-Bildanalysemodul (143), das konfiguriert ist, um eine quantitative Berechnung der Strukturdefektbereiche durchzuführen, die durch das Strukturdefekt-Bildidentifizierungsmodul markiert und klassifiziert wurden, und die Ergebnisse der quantitativen Berechnung mit den Strukturdefektbereichen zu korrelieren, wobei die quantitative Berechnung der Strukturdefektbereiche umfasst: die Größe des Korrosionsbereichs, die Größe des Bereichs mit Farbablösungen, die Länge und Breite des Risses, die Anzahl und Position der fehlenden Bolzen;
ein Auswertungsmodul (144), das konfiguriert ist, um ein Auswertungsergebnis auf Grundlage des Ergebnisses der quantitativen Berechnung und der Korrelation zwischen dem Ergebnis der quantitativen Berechnung und der Strukturdefektbereiche zu erzeugen.

2. Inspektionsvorrichtung für Hafenmaschinen nach Anspruch 1, **dadurch gekennzeichnet, dass** die Bodenüberwachungs- und -verarbeitungsvorrichtung umfasst:
eine Hauptsteuerungsmaschine (131), die geeignet ist, eine Inspektionsroute für jede Drohne zu planen, jede Drohne so zu steuern, dass sie entlang der Inspektionsroute fliegt und Luftaufnahmen durchführt, um das Bild der Hafenmaschine zu erhalten, und den Status jeder Drohne zu überwachen;
eine tragbare Fernsteuerung (132), die geeignet ist, Betriebsanweisungen zu empfangen und jede Drohne so zu steuern, dass sie entlang der Inspektionsroute fliegt und Luftaufnahmen durchführt, um Bilder von Hafenmaschinen entsprechend den Betriebsanweisungen zu erhalten;
wobei, wenn die tragbare Fernsteuerung nicht in Betrieb ist, jede Drohne durch die Hauptsteuerungsmaschine gesteuert wird und automatisch arbeitet, wenn die tragbare Fernsteuerung in Betrieb ist, jede Drohne den automatischen Betrieb verlässt und durch die tragbare Fernsteuerung gesteuert wird.

3. Inspektionsvorrichtung für Hafenmaschinen nach Anspruch 2, **dadurch gekennzeichnet, dass** die Hauptsteuerungsmaschine umfasst:
ein Schnittstellen-Interaktionsmodul (301), das geeignet ist, eine interaktive Schnittstelle zum Empfang von Anweisungen und zur Anzeige von Informationen zu erzeugen;
ein Front-End-Datenverwaltungsmodul (302), das geeignet ist, die Basisdaten der Hafenmaschinen von der Datenverwaltungs- und -auswertungsvorrichtung oder dem Schnittstellen-Interaktionsmodul zu erhalten;
ein Routenplanungsmodul (303), das geeignet ist, eine automatische Inspektionsroute auf der Grundlage der vom Front-End-Datenverwaltungsmodul erhaltenen Basisdaten der Hafenmaschinen zu planen, oder eine festgelegte Inspektionsroute auf der Grundlage der von der interaktiven Schnittstelle erhaltenen Anweisungen zu planen;
ein Luftfotografie-Steuermodul (304), das geeignet ist, jede Drohne so zu steuern, dass sie fliegt und Luftfotografie entsprechend der automatischen Inspektionsroute oder der festgelegten Inspektionsroute, die durch das Routenplanungsmodul geplant wurde, durchführt, um das Bild der Hafenmaschine zu erhalten;
ein Überwachungsmodul (305), das geeignet ist, die 3D-Position und den Status jeder Drohne zu überwachen;
ein Kommunikationsmodul (306), das geeignet ist, mit der Datenverwaltungs- und - auswertungsvorrichtung und der tragbaren Fernsteuerung zu kommunizieren.

4. Inspektionsvorrichtung für Hafenmaschinen nach Anspruch 2, **dadurch gekennzeichnet, dass** die tragbare Fernsteuerung umfasst:
einen tragbaren Manipulator (307), der geeignet ist, von einem Bediener gehalten zu werden, Betriebsanweisungen zu empfangen und jede Drohne gemäß den Betriebsanweisungen zu steuern;
ein Datenübertragungsmodul (308), das geeignet ist, eine Datenkommunikation mit jeder Drohne und der Hauptsteuerungsmaschine durchzuführen und den Status jeder Drohne zu überwachen;
ein Bildübertragungsmodul (309), das geeignet ist, eine Bildkommunikation mit jeder Drohne und der Hauptsteuerungsmaschine durchzuführen und die Bilder und Videos der Hafenmaschinen zu erhalten, die durch die Luftaufnahmen jeder Drohne erhalten wurden.

5. Inspektionsvorrichtung für Hafenmaschinen nach Anspruch 1, **dadurch gekennzeichnet, dass**,
die Basisdaten der Hafenmaschinen Größendaten und Positionsdaten der Hafenmaschinen enthalten;
die Routendaten geplante Routendaten und tatsächliche Routendaten enthalten, wobei die geplanten Routendaten automatische Inspektionsroutendaten und festgelegte Inspektionsroutendaten enthalten;
die Statusdaten der Drohne umfassen: Zeit, Erfassungspunktnummer, horizontale Koordinate der Ebene, longitudinale Koordinate der Ebene, Höhenkoordinate, Neigungswinkel, Kippwinkel, Gierwinkel, Neigungswinkel des kardanischen Aufnahmesystems, Kippwinkel des kardanischen Aufnahmesystems und Gierwinkel des kardanischen Aufnahmesystems;
die Verarbeitung der Basisdaten, der Routendaten, der Statusdaten der Drohne und der Bilddaten der Hafenmaschinerie umfasst: Speichern, Löschen, Modifizieren, Verschlüsseln, Entschlüsseln, Klassifizieren, Filtern, Statistiken, Importieren und Exportieren.

6. Inspektionsvorrichtung für Hafenmaschinen nach Anspruch 1,
**dadurch gekennzeichnet, dass** jede Drohne umfasst: einen Rumpf, ein Flugmodul, ein Flugkontrollmodul, ein Datenübertragungsmodul, ein Bildübertragungsmodul, ein Hindernisvermeidungsmodul, ein Positionierungsmodul, eine Luftbildkamera und eine Verfolgungskamera.

7. Inspektionsverfahren für Hafenmaschinen unter Verwendung der Inspektionsvorrichtung für Hafenmaschinen nach einem der Ansprüche 1 bis 6, **dadurch gekennzeichnet, dass** das Inspektionsverfahren umfasst:
einen Schritt einer Routenplanung, der eine automatische Inspektionsroute auf der Grundlage der Basisdaten der Hafenmaschinen plant;
einen Schritt einer Drohnen-Luftfotografie, bei dem jede Drohne so gesteuert wird, dass sie entsprechend der automatischen Inspektionsroute fliegt und Luftaufnahmen der Hafenmaschinen macht, der Status jeder Drohne überwacht wird und von der Drohne aufgenommene Bilder empfangen werden;
einen Schritt der Datenverarbeitung, der eine Strukturdefekterkennung und eine Strukturdefektanalyse an den von jeder Drohne aufgenommenen Bildern durchführt und Auswertungsergebnisse auf der Grundlage der Strukturdefekterkennung und der Strukturdefektanalyse erzeugt,
wobei die Defekterkennung das Identifizieren von Strukturdefektbereichen in Bildern von Hafenmaschinen durch das Strukturdefekt-Bilderkennungsmodul, das Markieren und Klassifizieren von Strukturdefektbereichen umfasst, wobei die Klassifizierung von Strukturdefektbereichen umfasst: Korrosion, Risse, fehlende Bolzen, Farbablösungen und andere Strukturdefekte;
wobei die Strukturdefektanalyse eine quantitative Berechnung durch das Strukturdefekt-Bildanalysemodul der Strukturdefektbereiche, die durch das Strukturdefekt-Bildidentifizierungsmodul markiert und klassifiziert wurden, und das Korrelieren der Ergebnisse der quantitativen Berechnung mit den Strukturdefektbereichen umfasst, wobei die quantitative Berechnung der Strukturdefektbereiche umfasst: die Größe des Korrosionsbereichs, die Größe des Bereichs mit Farbablösungen, die Länge und Breite des Risses, die Anzahl und Position der fehlenden Bolzen.

8. Inspektionsverfahren für Hafenmaschinen nach Anspruch 7, **dadurch gekennzeichnet, dass** es ferner umfasst:
einen Schritt der Routenanpassung, der eine festgelegte Inspektionsroute gemäß den von der interaktiven Schnittstelle erhaltenen Anweisungen erzeugt, wobei jede Drohne gemäß der festgelegten Inspektionsroute fliegt, um Luftaufnahmen der Hafenmaschinen durchzuführen.

9. Inspektionsverfahren für Hafenmaschinen nach Anspruch 7, **dadurch gekennzeichnet, dass** es ferner umfasst:
einen Schritt der manuellen Steuerung, bei dem die tragbare Fernsteuerung bedient wird, wobei jede Drohne den automatischen Betrieb beendet und so gesteuert wird, dass sie unter der Steuerung der tragbaren Fernsteuerung fliegt und Luftaufnahmen der Hafenmaschinen durchführt.

## Revendications

1. Appareil d'inspection pour machine portuaire, comprenant :
un ou plusieurs véhicules aériens sans pilote (101) appropriés pour effectuer des inspections d'une machine portuaire et obtenir des images de la machine portuaire ;
un ou plusieurs localisateurs au sol (102) appropriés pour localiser la position tridimensionnelle de chaque véhicule aérien sans pilote ;
un dispositif de surveillance et de traitement au sol (103), approprié pour communiquer avec chaque véhicule aérien sans pilote, commander le vol de chaque véhicule aérien sans pilote, recevoir les images acquises par chaque véhicule aérien sans pilote et surveiller l'état de chaque véhicule aérien sans pilote ;
un dispositif de gestion et d'évaluation de données (104) approprié pour communiquer avec le dispositif de surveillance et de traitement au sol, stocker des données de base de la machine portuaire, recevoir l'image acquise par chaque véhicule aérien sans pilote à partir du dispositif de surveillance et de traitement au sol, effectuer une identification de défaut structurel et une analyse de défaut structurel sur la base de l'image, et générer des résultats d'évaluation sur la base de l'identification de défaut structurel et de l'analyse de défaut structurel ;
dans lequel le dispositif de gestion et d'évaluation de données comprend :
un module de gestion de données d'arrière-plan (141) approprié pour traiter les données de base de la machine portuaire, des données d'itinéraire, des données d'état de chaque véhicule aérien sans pilote et des données d'image de la machine portuaire ;
**caractérisé en ce que** le dispositif de gestion et d'évaluation de données comprend en outre
un module de reconnaissance d'image de défaut structurel (142) configuré pour identifier des zones de défaut structurel dans des images de machine portuaire, marquer et classer des zones de défaut structurel, dans lequel la classification de zones de défaut structurel inclut : la corrosion, des fissures, des boulons manquants, un décapage de peinture et d'autres défauts structurels ;
un module d'analyse d'image de défaut structurel (143) configuré pour effectuer un calcul quantitatif sur les zones de défaut structurel marquées et classées par le module d'identification de défaut structurel d'image, et corréler les résultats du calcul quantitatif avec les zones de défaut structurel, dans lequel le calcul quantitatif des zones de défaut structurel inclut : la taille de la zone de corrosion, la taille de la zone de décapage de peinture, la longueur et la largeur de la fissure, le nombre et l'emplacement des boulons manquants ;
un module d'évaluation (144) configuré pour générer un résultat d'évaluation sur la base du résultat du calcul quantitatif et de la corrélation entre le résultat du calcul quantitatif et la zone de défaut structurel.

2. Appareil d'inspection pour machine portuaire selon la revendication 1, **caractérisé en ce que** le dispositif de surveillance et de traitement au sol comprend :
une machine de commande principale (131) appropriée pour planifier un itinéraire d'inspection pour chaque véhicule aérien sans pilote, commander chaque véhicule aérien sans pilote pour qu'il vole le long de l'itinéraire d'inspection et effectuer une photographie aérienne de manière à obtenir l'image de la machine portuaire, et surveiller l'état de chaque véhicule aérien sans pilote ;
un dispositif de commande à distance portatif (132) approprié pour recevoir des instructions d'opération, et pour commander chaque véhicule aérien sans pilote pour qu'il vole et effectue une photographie aérienne de manière à obtenir des images de la machine portuaire conformément aux instructions d'opération ;
dans lequel, lorsque le dispositif de commande à distance portatif n'est pas en fonctionnement, chaque véhicule aérien sans pilote est commandé par la machine de commande principale et fonctionne automatiquement, et lorsque le dispositif de commande à distance portatif est en fonctionnement, chaque véhicule aérien sans pilote quitte le fonctionnement automatique et est commandé par le dispositif de commande à distance portatif.

3. Appareil d'inspection pour machine portuaire selon la revendication 2, **caractérisé en ce que** la machine de commande principale comprend :
un module d'interaction d'interface (301), approprié pour générer une interface interactive pour recevoir des instructions et afficher des informations ;
un module de gestion de données frontal (302) approprié pour obtenir les données de base de la machine portuaire à partir du dispositif de gestion et d'évaluation de données ou du module d'interaction d'interface ;
un module de planification d'itinéraire (303) adapté pour planifier un itinéraire d'inspection automatique sur la base des données de base de machine portuaire obtenues par le module de gestion de données frontal, ou pour planifier un itinéraire d'inspection désigné sur la base des instructions obtenues à partir de l'interface interactive ;
un module de commande de photographie aérienne (304) approprié pour commander chaque véhicule aérien sans pilote pour voler et effectuer une photographie aérienne selon l'itinéraire d'inspection automatique ou l'itinéraire d'inspection désigné planifié par le module de planification d'itinéraire pour obtenir l'image de machine portuaire ;
un module de surveillance (305) approprié pour surveiller la position et l'état 3D de chaque véhicule aérien sans pilote ;
un module de communication (306) approprié pour communiquer avec le dispositif de gestion et d'évaluation de données et le dispositif de commande à distance portatif.

4. Appareil d'inspection pour machine portuaire selon la revendication 2, **caractérisé en ce que** le dispositif de commande à distance portatif comprend :
un manipulateur portatif (307) approprié pour être tenu par un opérateur, recevoir des instructions d'opération et commander chaque véhicule aérien sans pilote selon les instructions d'opération ;
un module de transmission de données (308) approprié pour effectuer une communication de données avec chaque véhicule aérien sans pilote et la machine de commande principale, et surveiller l'état de chaque véhicule aérien sans pilote ;
un module de transmission d'image (309) approprié pour effectuer une communication d'image avec chaque véhicule aérien sans pilote et la machine de commande principale, et obtenir les images et vidéos de la machine portuaire obtenues par la photographie aérienne de chaque véhicule aérien sans pilote.

5. Appareil d'inspection pour machine portuaire selon la revendication 1, **caractérisé en ce que**,
les données de base de de la machine portuaire incluent des données de taille et des données de position de la machine portuaire ;
les données d'itinéraire incluent des données d'itinéraire planifié et des données d'itinéraire réel, dans lequel les données d'itinéraire planifié incluent des données d'itinéraire d'inspection automatique et des données d'itinéraire d'inspection désigné ;
les données d'état de véhicule aérien sans pilote incluent : l'heure, un nombre de points de détection, la coordonnée horizontale du plan, la coordonnée longitudinale du plan, la coordonnée d'altitude, l'angle de tangage, l'angle d'inclinaison, l'angle de lacet, l'angle de tangage de la nacelle de photographie, l'angle d'inclinaison de la nacelle de photographie et l'angle de lacet de la nacelle de photographie ;
le traitement des données de base, des données d'itinéraire, des données d'état de véhicule aérien sans pilote et des données d'image de machine portuaire inclut : la sauvegarde, la suppression, la modification, le cryptage, le décryptage, la classification, le filtrage, les statistiques, l'importation et l'exportation.

6. Appareil d'inspection pour machine portuaire selon la revendication 1, **caractérisé en ce que** chaque véhicule aérien sans pilote inclut : un fuselage, un module de vol, un module de commande de vol, un module de transmission de données, un module de transmission d'image, un module d'évitement d'obstacle, un module de positionnement, une caméra aérienne et une caméra de suivi.

7. Procédé d'inspection pour machine portuaire utilisant l'appareil d'inspection pour machine portuaire selon l'une quelconque des revendications 1 à 6, **caractérisé en ce que** le procédé d'inspection comprend :
une étape de planification d'itinéraire, de planification d'un itinéraire d'inspection automatique sur la base des données de base de machine portuaire ;
une étape de photographie aérienne de véhicule aérien sans pilote, commandant chaque véhicule aérien sans pilote pour qu'il vole selon un itinéraire d'inspection automatique et prenant des photos aériennes de la machine portuaire,
une surveillance de l'état de chaque véhicule aérien sans pilote, et une réception d'images acquises par le véhicule aérien sans pilote ;
une étape de traitement de données, de réalisation d'une reconnaissance de défaut structurel et d'une analyse de défaut structurel sur les images acquises par chaque véhicule aérien sans pilote, et de génération de résultats d'évaluation sur la base de la reconnaissance de défaut structurel et de l'analyse de défaut structurel,
dans lequel la reconnaissance de défaut comprend l'identification de zones de défaut structurel dans des images de machine portuaire par le module de reconnaissance d'image de défaut structurel, le marquage et la classification de zones de défaut structurel, dans lequel la classification de zones de défaut structurel inclut : la corrosion, les fissures, les boulons manquants, le décapage de peinture et d'autres défauts structurels ;
dans lequel l'analyse de défaut structurel comprend un calcul quantitatif par le module d'analyse d'image de défaut structurel sur les zones de défaut structurel marquées et classées par le module d'identification de défaut structurel d'image, et la mise en corrélation des résultats du calcul quantitatif avec les zones de défaut structurel, dans lequel le calcul quantitatif des zones de défaut structurel inclut : la taille de la zone de corrosion, la taille de la zone décapée de peinture, la longueur et la largeur de la fissure, le nombre et l'emplacement des boulons manquants.

8. Procédé d'inspection pour machine portuaire selon la revendication 7, **caractérisé en ce qu'**il comprend en outre :
une étape d'ajustement d'itinéraire, générant un itinéraire d'inspection désigné selon les instructions obtenues à partir de l'interface interactive, dans lequel chaque véhicule aérien sans pilote vole selon l'itinéraire d'inspection désigné pour effectuer une photographie aérienne de la machine portuaire.

9. Procédé d'inspection pour machine portuaire selon la revendication 7, **caractérisé en ce qu'**il comprend en outre :
une étape de commande manuelle, actionnant le dispositif de commande à distance portatif, dans lequel chaque véhicule aérien sans pilote quitte le fonctionnement automatique et est commandé pour voler et effectuer une photographie aérienne de la machine portuaire sous la commande du dispositif de commande à distance portatif.
